# EUROPEAN PATENT APPLICATION

(11) **EP 4 012 237 A1**
(43) Date of publication of application: **15.06.2022**
(21) Application number: 21857965.4
(22) Date of filing: 05.03.2021
(51) Int. Cl.: F16K 31/04, H02K 7/14, H02K 11/215

(54) **IC HOLDER, ELECTRIC VALVE, FLUID CONTROL DEVICE, AND MANUFACTURING METHOD FOR SAME**

(30) Priority: 18.08.2020 JP 2020137763
(71) Applicant: Pacific Industrial Co., Ltd., Ogaki-shi, Gifu 503-8603 (JP)
(72) Inventor: HAYASHI Hisao, Ogaki-shi, Gifu 503-8603 (JP)
(74) Representative: Kramer Barske Schmidtchen Patentanwälte PartG mbB
(86) International application number: PCT/JP2021/008655
(87) International publication number: WO 2022/038813

(57) **Abstract**

[Problem to be solved] Provided are an IC holder, an electric valve, a fluid control device, and a method of manufacturing the fluid control device capable of improving production efficiency of a device including an actuator and a circuit board.

[Solution] An IC holder 40 of the present disclosure holds a magnetic sensor IC 50 placed along an outer surface of a motor 20M serving as an actuator to detect operation of a rotor 22 and supports a plurality of detecting connection pins 52 of the magnetic sensor IC 50 so that tip portions of the plurality of detecting connection pins 52 extend in parallel with tip portions of a plurality of driving connection pins 28 of the motor 20M.

## Description

### TECHNICAL FIELD

The present disclosure relates to an IC holder that holds a magnetic sensor IC, an electric valve including, as a drive source, an actuator to which the IC holder is attached, a fluid control device including the electric valve, and a method of manufacturing the fluid control device.

### BACKGROUND ART

There is known an electric valve in which a plurality of driving connection pins is fixed on an outer surface and those driving connection pins are passed through pin holes of an external circuit board and are soldered or brazed (see, for example, Patent Document 1).

### RELATED ART DOCUMENTS

### PATENT DOCUMENTS

Patent Document 1: JP 2020-67122 A (Fig. 1, paragraph [0033])

### SUMMARY OF THE INVENTION

### PROBLEMS TO BE SOLVED BY THE INVENTION

In a case where an actuator driven by open-loop control, such as a stepping motor serving as a drive source of the above-described electric valve, does not operate according to a drive command, such an operation is not detected as an abnormal operation in some cases, and a device (e.g., an air conditioner or the like) including the electric valve stops when another abnormality (e.g., abnormal heat generation) caused by that abnormal operation is detected. This causes problems such as serious abnormality and an increase in time and effort to identify the cause of the abnormality. As to this, there has been proposed a technology in which a magnetic sensor IC is mounted on the above-described external circuit board to detect whether or not the actuator operates on the basis of a change in a magnetic field. However, because the magnetic sensor IC is additionally mounted on the circuit board, reduction in production efficiency of a device including the circuit board and the actuator is a problem, and there is a demand for development of a technology for solving the problem.

### MEANS OF SOLVING THE PROBLEMS

An IC holder according to the present disclosure that has been made to solve the above problem is an IC holder that is fixed to an outer surface of a motor and holds a magnetic sensor IC for detecting whether or not a rotor operates based on a change in a magnetic field outside the motor. The motor including a rotor case housing the rotor, an armature case housing an armature and fitted on outside of the rotor case, and a plurality of driving connection pins, on the armature case, to be inserted into a plurality of pin holes of an external circuit board. The IC holder includes a pin support portion that supports a plurality of detecting connection pins serving as connection pins of the magnetic sensor IC so that at least tip portions of the plurality of detecting connection pins extend in parallel with tip portions of the plurality of driving connection pins.

### BRIEF DESCRIPTION OF THE DRAWINGS

Fig. 1 is a perspective view of a fluid control device according to an embodiment of the present disclosure.
Fig. 2 is a cross-sectional side view of a fluid control device.
Fig. 3 is a cross-sectional side view of the fluid control device separated into a cover assembly and an electric valve main body.
Fig. 4 is a perspective view of an armature unit to which an IC holder is attached.
Fig. 5 is a partially broken perspective view of the fluid control device.
Fig. 6 is a partially broken perspective view of the fluid control device.
Fig. 7 is a perspective view of a magnetic sensor IC and the IC holder.
Fig. 8 is a perspective view of the IC holder as seen from diagonally below.
Fig. 9 is a perspective view of the IC holder holding a magnetic sensor IC.
Fig. 10 is a cross-sectional side view of the IC holder holding the magnetic sensor IC.
Fig. 11 is a bottom view of the IC holder holding the magnetic sensor IC.

### MODE FOR CARRYING OUT THE INVENTION

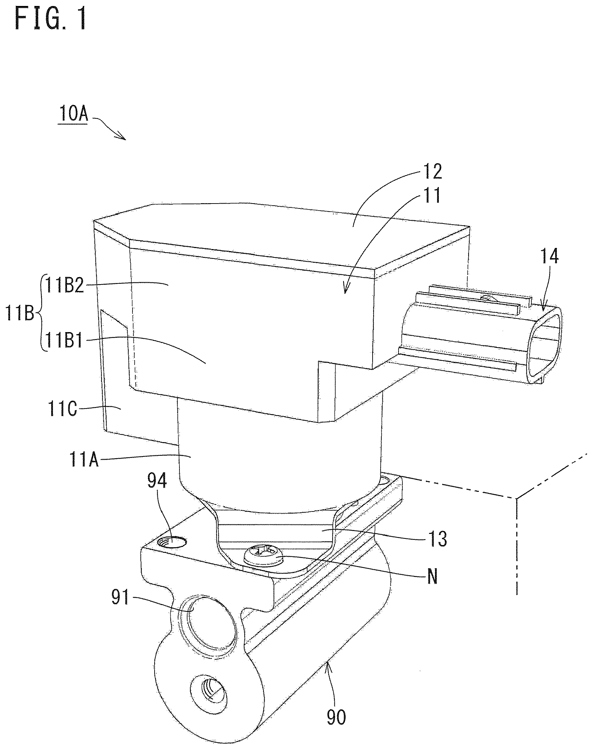

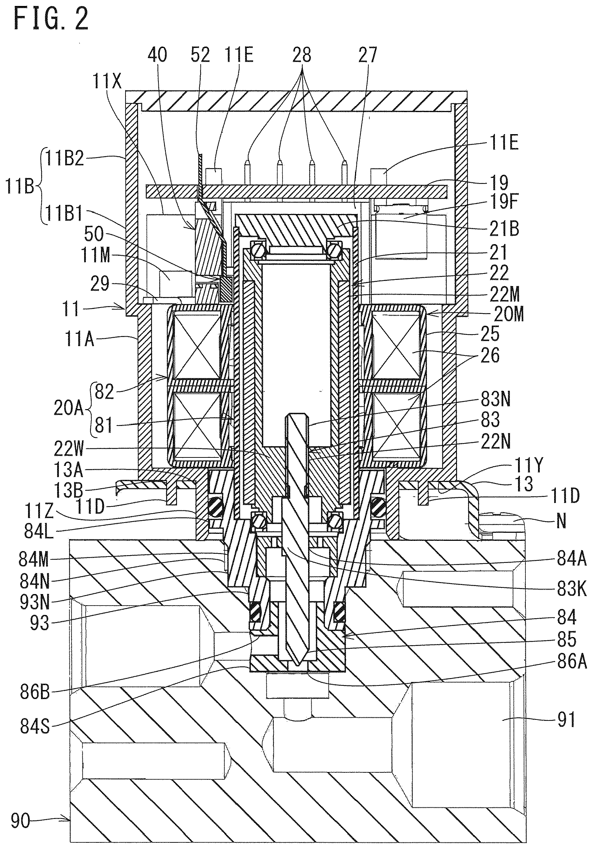

Hereinafter, embodiments of the present disclosure will be described with reference to Figs. 1 to 11. Fig. 1 illustrates an entire fluid control device 10A of the present disclosure. The fluid control device 10A forms, for example, a part of an air conditioner to be mounted on a vehicle and has a structure in which an electric valve 20A (see Fig. 2) is attached to a body 90 having a flow path 91 through which a refrigerant flows and is covered with an electric valve cover 11.

As illustrated in Fig. 2, the electric valve 20A includes a motor 20M as a drive source. The motor 20M is, for example, a stepping motor, and a rotor 22 thereof has, for example, a cylindrical shape and includes a plurality of magnets 22M on an outer peripheral surface. The rotor 22 is housed in a thin cylindrical rotor case 21 generally referred to as "CAN". Both end portions of the rotor 22 are rotatably supported by a disk-shaped lid body 21B and a base portion 84 via bearings. The lid body 21B closes one end portion of the rotor case 21, and the base portion 84 closes the other end portion of the rotor case 21.

Hereinafter, an axial direction of the rotor case 21 will be referred to as a vertical direction, and the lid body 21B side will be referred to as an upper side, whereas a side opposite thereto will be referred to as a lower side.

The base portion 84 is formed by fitting a plurality of tubular components, has an outer diameter that decreases downward in a stepwise manner, and includes a large diameter portion 84L, a relay portion 84M, and a small diameter portion 84S in order from the top. The rotor case 21 is fitted and fixed to an inner side of the large diameter portion 84L.

The rotor 22 includes a partition wall 22W at a position close to a lower end. A screw portion 83N formed at one end portion of a linear motion shaft 83 is screwed into a screw hole 22N penetrating a center portion of the partition wall 22W. An engagement shaft portion 83K having a non-circular cross section (e.g., a D-shaped cross section) is provided at an axially intermediate portion of the linear motion shaft 83. The engagement shaft portion 83K slidably penetrates an engagement hole 84A having a non-circular cross section (e.g., a D-shaped cross section) provided in the base portion 84. Therefore, when the rotor 22 rotates, the linear motion shaft 83 linearly moves up and down. A lower end portion of the linear motion shaft 83 is a tapered valve body 85. The opening degree of a valve hole 86A penetrating the center of an end portion of the small diameter portion 84S of the base portion 84 is changed by movement of the valve body 85. A side through hole 86B is formed in the small diameter portion 84S so as to penetrate the inside and outside of the small diameter portion 84S from a side.

The above-described flow path 91 of the body 90 is bent in a crank shape, and a valve body attachment hole 93 is formed in a part from an upper surface of the body 90 to the bent portion of the flow path 91. The valve body attachment hole 93 has a diameter that decreases in a stepwise manner toward a deep side and includes a screw portion 93N on an inner surface on the large diameter side. The base portion 84 is inserted into the valve body attachment hole 93, and a screw portion 84N formed in the large diameter portion 84L of the base portion 84 is screwed into the screw portion 93N of the valve body attachment hole 93. The small diameter portion 84S of the base portion 84 is inserted in the middle of the flow path 91 so that a fluid flowing between one end and the other end of the flow path 91 always passes through the valve hole 86A.

An armature unit 82 is fitted to an outer side of the rotor case 21. The armature unit 82 has a structure in which a pair of armatures 26 formed by winding a plurality of coils around a stator core (not illustrated) is housed in an armature case 25 and is coaxially arranged and combined. The entire armature unit 82 has, for example, a cylindrical shape. An electric valve main body 81, which is a member of the electric valve 20A other than the armature unit 82, and the armature unit 82 are separately manufactured and are then combined. An axial length of the armature unit 82 is shorter than an axial length of the rotor case 21. A lower surface of the armature unit 82 is adjacent to an upper surface of the base portion 84. A part of the rotor case 21 protrudes upward from an upper surface of the armature unit 82.

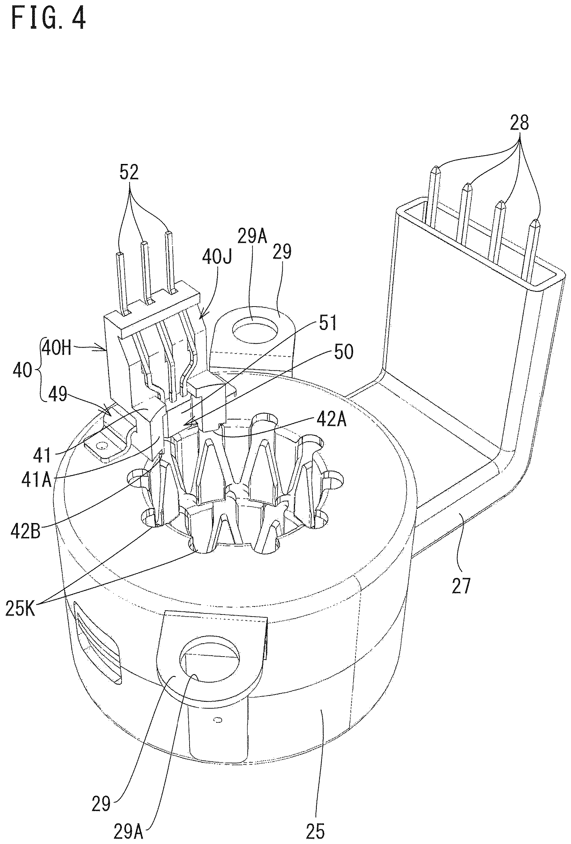

As illustrated in Fig. 4, a pin holding duct 27 protrudes laterally from a part of a side surface of the armature unit 82 and is then bent upward at a right angle. A tip portion of the pin holding duct 27 has a rectangular tubular structure that is flat in a radial direction of the armature unit 82 and has a rectangular tip opening. A tip surface of the pin holding duct 27 is positioned slightly above the lid body 21B (see Fig. 2).

A plurality of (e.g., four) driving connection pins 28 protrudes upward from the tip opening of the pin holding duct 27. The plurality of driving connection pins 28 is arranged in a line at equal intervals in a longitudinal direction of the tip opening of the pin holding duct 27.

A pair of positioning pieces 29 is provided at two positions other than a position of the pin holding duct 27 on the side surface of the armature unit 82. Each of the pair of positioning pieces 29 slightly protrudes from the upper surface of the armature unit 82 and is then bent toward a side at a right angle. The positioning piece 29 has a boss hole 29A vertically penetrating the positioning piece 29.

As illustrated in Fig. 2, the above-described electric valve cover 11 includes a cylindrical first sleeve portion 11Z just fitted to an outer side of the large diameter portion 84L of the base portion 84, a second sleeve portion 11A loosely fitted to an outer side of the armature unit 82, and a box portion 11B housing a circuit board 19 described later and the like.

The electric valve cover 11 is made from resin, and a fixing metal fitting 13 is fixed to a step surface 11Y between the first sleeve portion 11Z and the second sleeve portion 11A. The fixing metal fitting 13 is formed by boring a plurality of through holes 13A and 13B in a horizontally-extending strip-shaped sheet metal whose both end portions are bent downward in a crank shape. The first sleeve portion 11Z of the electric valve cover 11 penetrates the through hole 13A at the center of the fixing metal fitting 13. In addition, a plurality of thermal caulking protrusions 11D protruding from the step surface 11Y of the electric valve cover 11 is passed through the plurality of through holes 13B arranged around the through hole 13A and is thermally caulked. Screws N having passed through through holes (not illustrated) formed in the both end portions of the fixing metal fitting 13 are fastened to screw holes 94 (see Fig. 1) formed in the body 90. Thus, the electric valve cover 11 is fixed to the body 90.

As illustrated in Fig. 1, a groove portion 11C for housing the pin holding duct 27 (see Fig. 4) projects from a circumferential part of the second sleeve portion 11A of the electric valve cover 11. The box portion 11B of the electric valve cover 11 is formed by overlaying an upper box portion 11B2 on a lower box portion 11B1. The lower box portion 11B1 is a parallelepiped having a rectangular planar shape, and the upper box portion 11B2 is the same in length in a transverse direction and is longer in a longitudinal direction on both sides with respect to the lower box portion 11B1. The above-described groove portion 11C is connected to a lower surface of a part of the upper box portion 11B2 projecting toward one side from the lower box portion 11B1. An opening in an upper surface of the upper box portion 11B2 is closed by subjecting the lid body 12 to vibration welding or fixing the lid body 12 with an adhesive. Corner portions of the upper box portion 11B2 on both sides of the groove portion 11C are chamfered.

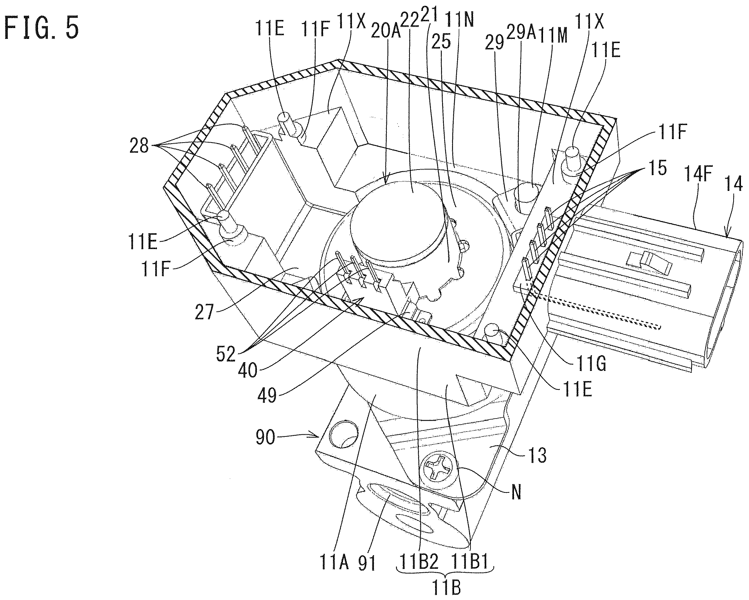

As illustrated in Fig. 5, a pair of bosses 11M (Fig. 5 illustrates only one boss 11M) protrudes from opposite positions across a center portion of the second sleeve portion 11A on a step surface 11N of the lower box portion 11B1 with respect to the second sleeve portion 11A. The pair of positioning pieces 29 of the armature unit 82 is placed on the step surface 11N, then the bosses 11M are fitted into the boss holes 29A of the respective positioning pieces 29, and the bosses 11M are subjected to thermal caulking. Thus, the armature unit 82 is fixed to the electric valve cover 11.

A connector portion 14 is provided on a side of the box portion 11B opposite to a side on which the groove portion 11C is provided. The connector portion 14 has a structure including a plurality of connector pins 15 inside a hood 14F. The hood 14F protrudes toward a side from a position extending over the lower box portion 11B1 and the upper box portion 11B2. The plurality of connector pins 15 has an L shape, and one sides of the L-shaped connector pins are arranged side by side in a line so as to protrude from a back surface of the hood 14, whereas the other sides thereof are arranged side by side in a line so as to protrude upward from a step surface 11X of the upper box portion 11B2 with respect to the lower box portion 11B1. A pedestal protrusion 11G that supports the circuit board 19 described later from below protrudes from a part of the step surface 11X from which the connector pins 15 protrude. Further, on the step surface 11X, pedestal protrusions 11F having an upper surface flush with an upper surface of the pedestal protrusion 11G are provided on both sides of the pedestal protrusion 11G and on both sides of the groove portion 11C, and thermal caulking protrusions 11E protrude from upper surfaces of the respective pedestal protrusions 11F.

As illustrated in Fig. 2, an upper surface of the above-described rotor 22 (an upper surface of the lid body 21B) is arranged to be substantially flush with the step surface 11X, and an upper surface of the pin holding duct 27 is located above the step surface 11X, and further the upper surfaces of the pedestal protrusions 11G and 11F are located slightly above the upper surface of the pin holding duct 27 (not illustrated).

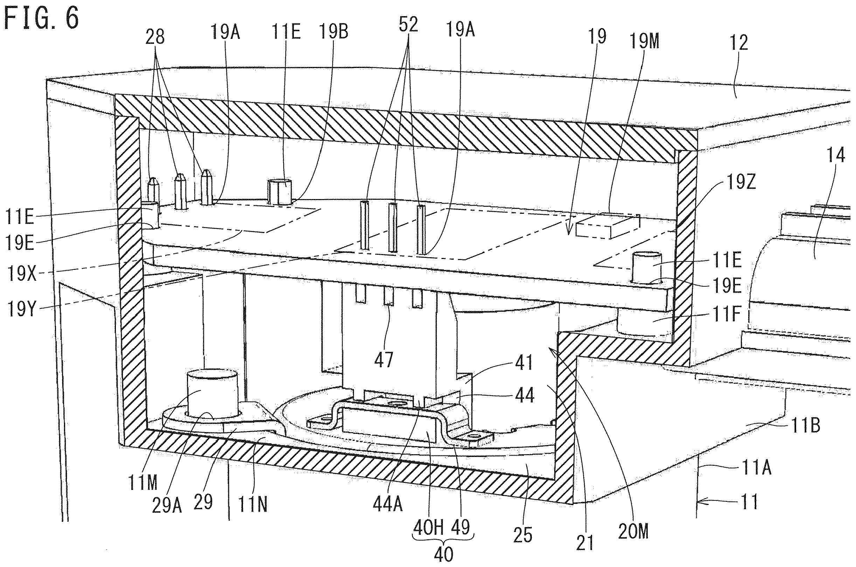

As illustrated in Fig. 6, the circuit board 19 has a shape in which a pair of corner portions of a quadrangle is chamfered, which is similar to the planar shape of the upper box portion 11B2. The circuit board 19 has positioning holes 19E that the plurality of thermal caulking protrusions 11E penetrates and a plurality of pin holes 19A that the plurality of driving connection pins 28, the plurality of connector pins 15, and a plurality of detecting connection pins 52 described later penetrate. The circuit board 19 is placed on the pedestal protrusions 11G and 11F and is fixed to the electric valve cover 11 by thermal caulking of the thermal caulking protrusions 11E. The plurality of driving connection pins 28 is, for example, soldered to a motor drive circuit 19X on the electric valve cover 11. The plurality of detecting connection pins 52 is, for example, soldered to a detection circuit 19Y on the electric valve cover 11. The plurality of connector pins 15 is, for example, soldered to an input/output circuit 19Z on the electric valve cover 11. A microcomputer 19M connected to the motor drive circuit 19X, the detection circuit 19Y, and the input/output circuit 19Z is mounted on an upper surface of the circuit board 19. Further, as illustrated in Fig. 2, a relatively large electronic component 19F such as a chemical capacitor is mounted on a part of a lower surface of the electric valve cover 11 facing a space around the rotor 22.

The connector portion 14 is connected to a connector of a harness extending from an ECU of the vehicle. The microcomputer 19M receives, for example, a command signal regarding the opening degree of the valve hole 86A from the ECU and controls output of the motor drive circuit 19X in accordance with the command signal, thereby controlling a rotational position of the rotor 22 to control a flow rate of the fluid flowing through the flow path 91. Position control of the rotor 22 at this time is performed by open-loop control. Therefore, even if the rotor 22 does not move due to an abnormality such as foreign matter being caught in a movable portion of the electric valve 20A or a part of the coil of the armature 26 being disconnected, the abnormality is not detected in the position control of the rotor 22.

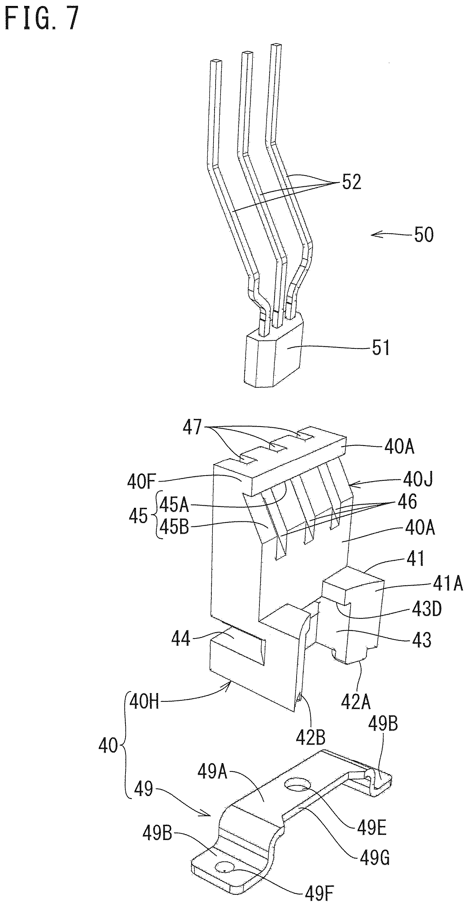

On the other hand, in the electric valve 20A of the present embodiment, the magnetic sensor IC 50 in Fig. 7 is placed along an outer surface of the motor 20M so as to monitor presence or absence of the above abnormality based on a change in a magnetic field caused by rotation of the rotor 22. Specifically, when the rotor 22 rotates, positions of the magnets 22M of the rotor 22 change with respect to the magnetic sensor IC 50, and a detection signal of the magnetic sensor IC 50 changes by a predetermined magnitude. The microcomputer 19M takes in the detection signal of the magnetic sensor IC 50, and, in a case where the detection signal of the magnetic sensor IC 50 does not change by the predetermined magnitude even though the microcomputer 19M controls the motor drive circuit 19X to rotate the rotor 22, the microcomputer 19M determines that an abnormality has occurred and outputs an abnormality detection signal to the ECU.

The magnetic sensor IC 50 outputs, for example, a detection signal corresponding to strength of the magnetic field by using the Hall effect. An IC main body 51 thereof has, for example, a flat trapezoidal cross-sectional shape, extends in the vertical direction, and has one end surface from which the plurality of (e.g., three) detecting connection pins 52 extends. The plurality of detecting connection pins 52 has a quadrangular cross section and initially extends straight. The detecting connection pins 52 are bent in a shape described later in order to cause an IC holder 40 described next to hold the magnetic sensor IC 50.

As illustrated in Fig. 6, the magnetic sensor IC 50 is placed along the outer surface of the motor 20M while being held by the IC holder 40 fixed to the motor 20M. The IC holder 40 is formed by joining a fixing metal fitting 49 to a holder main body 40H that is a resin molded product. Hereinafter, in the description of the holder main body 40H, the fixing metal fitting 49, and the magnetic sensor IC 50, a direction facing the rotor case 21 will be referred to as a forward and backward direction, and a side close to the rotor case 21 will be referred to as a front side, whereas a side opposite thereto will be referred to as a back side.

As illustrated in Fig. 7, the holder main body 40H includes a base end protrusion 41 at a lower end portion of a front surface 40A of a vertically long prismatic body and has a V-shaped groove 45 extending in a lateral direction at a position close to an upper end thereof.

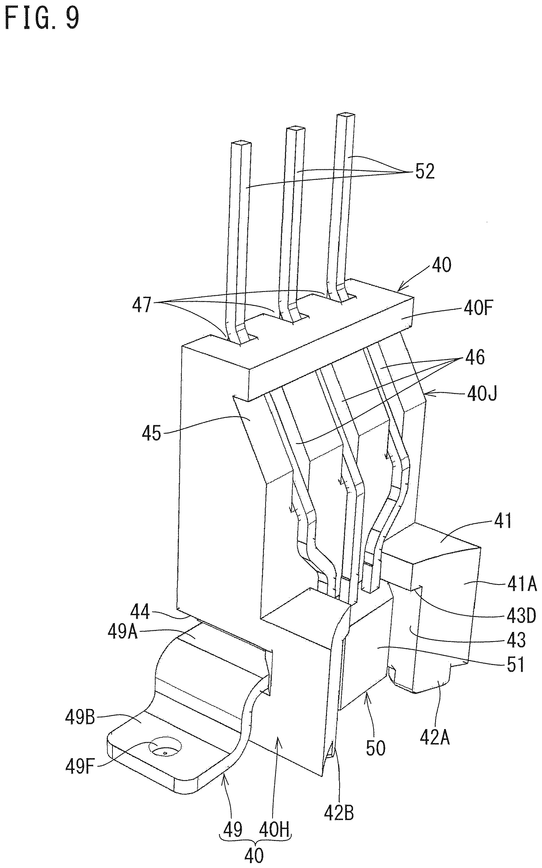

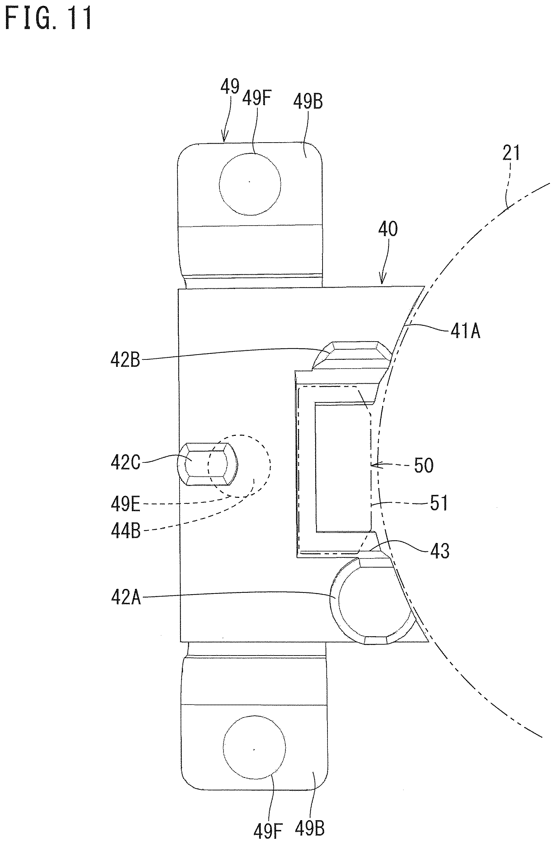

The base end protrusion 41 is provided so that the entire lower end portion of the front surface 40A of the holder main body 40H protrudes in a stepwise manner, and a front surface of the base end protrusion 41 itself is a curved surface 41A that is curved to match a side surface of the rotor case 21 (see Fig. 11). A center portion in the lateral direction of the base end protrusion 41 is cut into a vertically-extending angular groove shape to form a main body housing portion 43. Step surfaces 43D are formed at positions close to upper ends of a pair of inner surfaces facing each other in the main body housing portion 43. As illustrated in Fig. 9, a part of the main body housing portion 43 below the step surfaces 43D has a width in which the IC main body 51 can be housed, and a part of the main body housing portion 43 above the step surfaces 43D is narrower in width than the IC main body 51 and has a width in which the plurality of detecting connection pins 52 extending straight from the IC main body 51 just pass through.

As illustrated in Fig. 7, the V-shaped groove 45 has a horizontal surface 45A on an upper side and an inclined surface 45B inclined from the vertical direction on a lower side. The front surface 40A of a head portion 40F above the V-shaped groove 45 in the holder main body 40H is slightly shifted backward from the front surface 40A between the V-shaped groove 45 and the base end protrusion 41 in the holder main body 40H.

An upper side of the holder main body 40H above the main body housing portion 43 serves as a pin support portion 40J that holds the plurality of detecting connection pins 52. The pin support portion 40J has a plurality of pin holding grooves 46 and a plurality of pin holding recesses 47. The plurality of pin holding grooves 46 extends in the inclined surface 45B in a longitudinal direction. The plurality of pin holding recesses 47 is open to an upper corner portion on a back surface side of the holder main body 40H and communicates with the plurality of pin holding grooves 46. Each of the plurality of pin holding grooves 46 has an angular groove structure, and a groove width thereof has a size that just receives the detecting connection pin 52. An interval between the pin holding grooves 46 is greater than an initial interval between the detecting connection pins 52 extending straight from the IC main body 51.

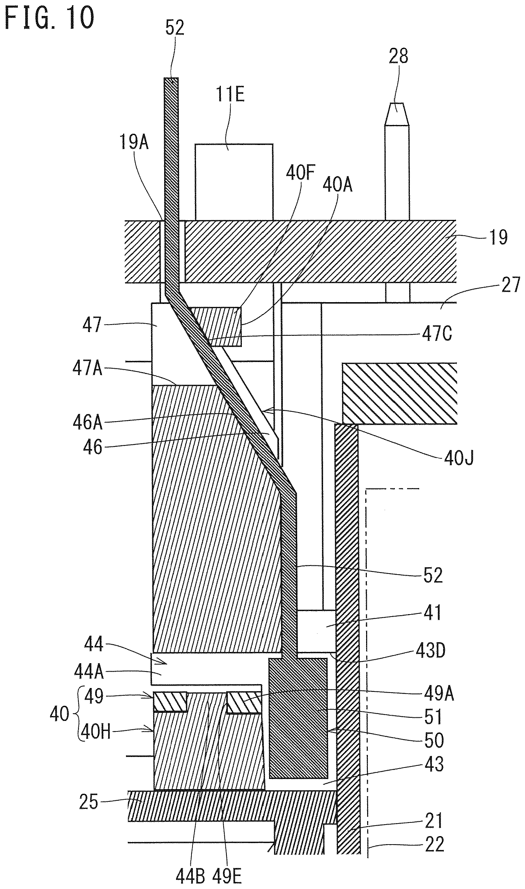

Each pin holding recess 47 has inner surfaces flush with a pair of inner surfaces of each pin holding groove 46. As illustrated in Fig. 10, a lower surface 47A of the pin holding recess 47 is horizontal at a position shifted downward from the horizontal surface 45A of the V-shaped groove 45. In the pin holding recess 47, a back surface of the front surface 40A of the head portion 40F with the rotor case 21 is an inner inclined surface 47C that is parallel with a bottom surface 46A of the pin holding groove 46 and is shifted forward therefrom. The shortest distance between an extension surface of the bottom surface 46A of the pin holding groove 46 and the inner inclined surface 47C is substantially the same as a thickness of the detecting connection pin 52 having the quadrangular cross section.

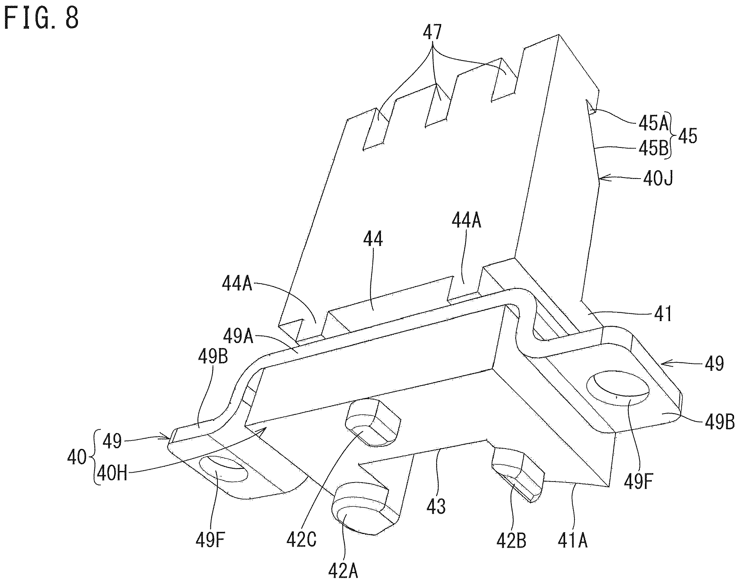

As illustrated in Fig. 8, a metal fitting receiving groove 44 that is open to the back surface and both side surfaces is formed at a position close to a lower end of the holder main body 40H so as to receive a part of the fixing metal fitting 49. A pair of elongated protrusions 44A extending in the forward and backward direction is formed at positions close to both ends in the lateral direction on an upper surface inside the metal fitting receiving groove 44. A positioning protrusion 44B (see Fig. 10) protrudes from the center in the lateral direction on a lower surface inside the metal fitting receiving groove 44. A back surface of the curved surface 41A of the base end protrusion 41 in the metal fitting receiving groove 44 projects backward in a trapezoidal shape, and the main body housing portion 43 is opened at the center in the lateral direction thereof.

The holder main body 40H is molded by using a resin molding die that is opened in the forward and backward direction. At that time, the extension surface of the above-described bottom surface 46A or inner inclined surface 47C is a parting line between the pin holding groove 46 and the pin holding recess 47, and the center in the forward and backward direction of side surfaces of the positioning protrusion 44B is a parting line.

As illustrated in Fig. 7, the fixing metal fitting 49 has a structure in which both end portions of a strip-shaped sheet metal extending in the lateral direction are bent downward in a crank shape and has through holes 49E and 49F at a center portion and both end portions in the longitudinal direction. A central horizontal portion 49A between both bent portions of the fixing metal fitting 49 has one side edge portion that is cut out in a trapezoidal shape to form an interference avoidance portion 49G. The central horizontal portion 49A is received by the metal fitting receiving groove 44 from the interference avoidance portion 49G side while being bent upward, and, as illustrated in Fig. 10, when the positioning protrusion 44B is fitted into the through hole 49E of the fixing metal fitting 49, the central horizontal portion 49A is elastically restored and is locked in the metal fitting receiving groove 44.

As illustrated in Fig. 8, a plurality of positioning protrusions 42A to 42C is provided on a lower surface of the holder main body 40H. The positioning protrusion 42C is fitted into a positioning hole (not illustrated) provided for the IC holder 40 on an upper surface of the armature case 25, and the positioning protrusions 42A and 42B are fitted into recesses 25K (see Fig. 4) that are provided not for the IC holder 40 and are open to an inner edge portion of the upper surface of the armature case 25. Thus, the IC holder 40 is two-dimensionally positioned on the upper surface of the armature case 25. Screws passed through the pair of through holes 49F of the fixing metal fitting 49 are screwed into screw holes (not illustrated) provided for fixing the IC holder 40 on the upper surface of the armature case 25. Thus, the IC holder 40 is fixed to the armature case 25. Then, as illustrated in Fig. 11, the curved surface 41A of the IC holder 40 is adjacent to the side surface of the rotor case 21. As illustrated in Fig. 2, an upper surface of the IC holder 40 is arranged to be substantially flush with an upper surface of the pin holding duct 27.

As illustrated in Fig. 7, in order to cause the IC holder 40 to hold the magnetic sensor IC 50, the plurality of detecting connection pins 52 is bent in advance in a shape matching the pin support portion 40J of the IC holder 40. Specifically, the plurality of detecting connection pins 52 initially extends straight upward from the IC main body 51, and, from this state, the central detecting connection pin 52 is bent backward in a crank shape, whereas the detecting connection pins 52 at both ends are laterally bent in a crank shape at a position close to a lower end and are then bent backward in a crank shape. Then, for example, tip portions of the plurality of detecting connection pins 52 are made parallel with the forward and backward direction and are passed from the plurality of pin holding grooves 46 through the plurality of pin holding recesses 47. Thereafter, the magnetic sensor IC 50 is rotated to lower the IC main body 51, and the IC main body 51 is received by the main body housing portion 43. Therefore, the magnetic sensor IC 50 is held by the IC holder 40 while movement thereof other than movement in a direction to approach the rotor case 21 is being restricted, and the plurality of detecting connection pins 52 extends upward from the upper surface of the IC holder 40. Then, as described above, the detecting connection pins 52 are passed through the pin holes 19A of the circuit board 19 and are, for example, soldered to the circuit board 19Y.

The configuration of the fluid control device 10A of the present embodiment has been described above. Next, a method of manufacturing the fluid control device 10A will be described.

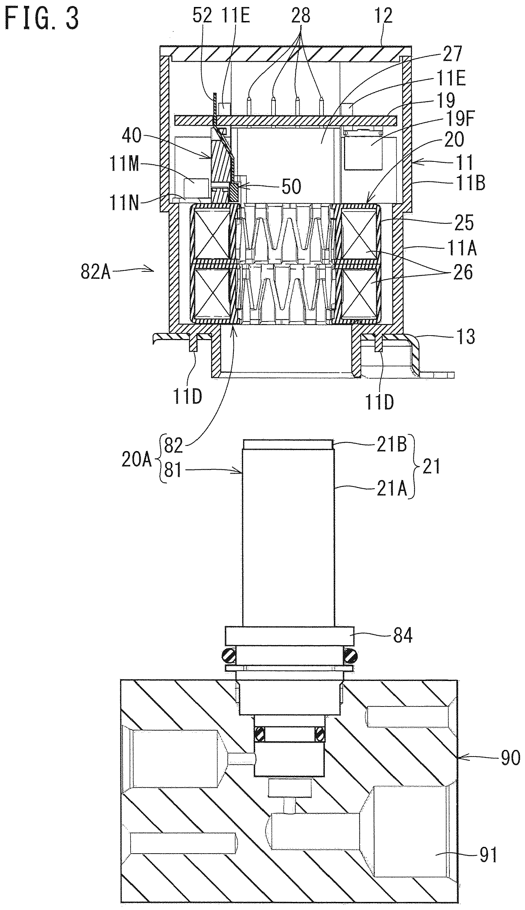

In order to manufacture the fluid control device 10A, first, as illustrated in Fig. 3, the electric valve 20A is prepared such that the electric valve 20A is separated into the armature unit 82 including the armature case 25 and contents thereof and the electric valve main body 81 other than the armature unit 82, the IC holder 40 is fixed to the armature unit 82, and the magnetic sensor IC 50 is attached to the IC holder 40. Then, the electric valve main body 81 and the electric valve cover 11 are fixed to the body 90 (body assembling step), and then the armature unit 82 is joined to the electric valve main body 81 and is housed in the electric valve cover 11. Further, the armature unit 82 is fixed to the electric valve cover 11 by thermal caulking of the bosses 11M of the electric valve cover 11. With this, the magnetic sensor IC 50 is undetachably fixed to the IC holder 40. The tip portions of the plurality of detecting connection pins 52 of the magnetic sensor IC 50, the plurality of driving connection pins 28 of the motor 20M, and the plurality of connector pins 15 of the connector portion 14 of the electric valve cover 11 extend upward in the electric valve cover 11.

The manufacturing step so far may be performed as follows. That is, a cover assembly 82A (see Fig. 3) in which the electric valve cover 11, the armature unit 82, and the IC holder 40 are joined may be prepared, then the cover assembly 82A may be joined to the electric valve main body 81 having been fixed to the body 90, and thus the cover assembly 82A may be fixed to the body 90.

Next, the circuit board 19 is housed in the electric valve cover 11, then the plurality of driving connection pins 28, the detecting connection pins 52, and the connector pins 15 are inserted into the plurality of pin holes 19A of the circuit board 19, and those pins are, for example, soldered to the circuit board 19 (board connecting step). Finally, the lid body 21B is fixed to close an opening in an end portion of the electric valve cover 11 (sealing step). Thus, the fluid control device 10A is completed.

The following is a case where the fluid control device 10A is manufactured by a general manufacturing method in which the circuit board 19 on which the magnetic sensor IC 50 is mounted in advance is joined to the electric valve cover 11 without using the IC holder 40. In that case, first, the detecting connection pins 52 of the magnetic sensor IC 50 are passed through the pin holes 19A of the circuit board 19 and are, for example, soldered. Then, the surface of the circuit board 19 on which the magnetic sensor IC 50 is mounted is placed along the outer surface of the motor 20M, and the driving connection pins 28 and the connector pins 15 are passed through the pin holes 19A of the circuit board 19 and are, for example, soldered. That is, a board connecting step of passing the detecting connection pins 52 of the magnetic sensor IC 50 through the pin holes 19A and performing soldering or the like and another board connecting step of passing the driving connection pins 28 and the connector pins 15 through the pin holes 19A and performing soldering or the like are separately performed, which takes time and effort.

On the other hand, in the method of manufacturing the fluid control device 10A of the present embodiment, the magnetic sensor IC 50 is attached to the motor 20M by using the IC holder 40, and therefore, the board connecting steps separately performed in a case where the IC holder 40 is not used are combined. This improves work efficiency. Further, in the above-described general manufacturing method, it is difficult to visually confirm whether or not the magnetic sensor IC 50 is arranged adjacent to the outer surface of the motor 20M because the magnetic sensor IC 50 and the motor 20M are hidden behind the circuit board 19. However, in a case where the IC holder 40 is used, the visual confirmation is performed easily. This improves production efficiency and assembling accuracy and also improves detection accuracy of the magnetic sensor IC 50. In other words, it is possible to downgrade the magnetic sensor IC 50 to reduce costs in order to achieve the same detection accuracy. Further, the pin support portion 40J of the IC holder 40 of the present embodiment supports the plurality of bent detecting connection pins 52, and therefore, even if the circuit board 19 abuts on the detecting connection pins 52 when the circuit board 19 is housed in the electric valve cover 11, external force thereof is received by the pin support portion 40J. This makes it possible to prevent the external force from being transmitted to the IC main body 51.

### [Other embodiments]

(1) The IC holder 40 of the above embodiment is attached to the drive source (motor 20M) of the electric valve 20A. However, for example, the IC holder may be attached to a drive source of a device other than the electric valve, such as an electric seat, an electric lock, or a wiper drive device, to hold the magnetic sensor IC.
(2) The actuator for which the IC holder of the present disclosure is used is not limited to the stepping motor, and any actuator may be used as long as an external magnetic field changes according to operation of the movable portion of the actuator. Specifically, the IC holder may be used for a DC motor or an actuator in which a rod serving as the movable portion is linearly moved by a solenoid.
(3) The magnetic sensor IC 50 of the above embodiment is a so-called Hall element that detects a change in a magnetic field by using the Hall effect. However, the magnetic sensor IC may be, for example, a magnetoresistive element that detects a change in a magnetic field by using the magnetoresistance or a magneto-impedance element that detects a change in a magnetic field by using the magneto-impedance effect of a high-permeability alloy magnetic material such as an amorphous alloy wire or a magnetic thin film.
(4) The above embodiment shows an example where the detection result of the magnetic sensor IC 50 is used to determine whether or not the rotor 22 moves. However, the detection result of the magnetic sensor IC may be used to detect the position of the rotor to improve accuracy of position control of the rotor.
(5) The IC holder 40 of the above embodiment is fixed to the armature case 25 of the motor 20M, but may be fixed to the rotor case 21. Specifically, for example, a structure in which the above-described holder main body 40H is fixed to a ring fitted to an outer side of the rotor case 21 or a structure in which the holder main body 40H is fixed to the rotor case 21 with an adhesive is adopted. However, in a case where the structure in which the IC holder 40 is fixed to the armature case 25 is adopted as in the above embodiment, a positional relationship between the driving connection pins 28 fixed to the armature case 25 and the detecting connection pins 52 of the magnetic sensor IC 50 held by the IC holder 40 is stabilized. This makes it easier to insert those pins into the pin holes 19A of the circuit board 19.
(6) The IC holder 40 of the above embodiment includes the holder main body 40H and the fixing metal fitting 49. However, a part corresponding to the fixing metal fitting 49 and the holder main body 40H may be integrally made from resin.
(7) In the above embodiment, the driving connection pins 28, the detecting connection pins 52, and the connector pins 15 extend in a rotational axis direction of the rotor 22 of the motor 20M, and the circuit board 19 is arranged to overlap one end portion of the rotor case 21. However, the driving connection pins 28, the detecting connection pins 52, and the connector pins 15 may be structured to extend in a direction perpendicular to or diagonally intersecting with the rotational axis direction of the rotor 22 of the motor 20M, and the circuit board 19 may be arranged to overlap the side surface of the rotor case 21 or the armature case 25.
(8) The IC holder 40 of the above embodiment supports the plurality of bent detecting connection pins 52 of the magnetic sensor IC 50, but may support the plurality of straight detecting connection pins 52. The IC holder 40 is not limited to an IC holder that supports the detecting connection pins 52 bent in the shape of the above embodiment, and, for example, may have a structure that supports the detecting connection pins 52 bent to approach the rotor case 21 or a structure that supports the detecting connection pins 52 bent only in the lateral direction. In a case where the tip portions of the driving connection pins 28 extend toward a side, the IC holder 40 may support the plurality of detecting connection pins 52 bent at 90° from the IC main body 51.

Note that, although specific examples of the technology included in the claims are disclosed in the present specification and the drawings, the technology described in the claims is not limited to these specific examples and includes those obtained by variously modifying and changing the specific examples and also includes those obtained by singly extracting a part from the specific examples.

### DESCRIPTION OF THE REFERENCE NUMERAL

- 10A: fluid control device
- 11: electric valve cover
- 12: lid body
- 19: circuit board
- 19A: pin hole
- 20A: electric valve
- 20M: motor
- 21: rotor case
- 22: rotor (movable portion)
- 25: armature case
- 26: armature
- 28: driving connection pin
- 40: IC holder
- 40J: pin support portion
- 43: main body housing portion
- 46: pin holding groove
- 47: pin holding recess
- 49: fixing metal fitting
- 50: magnetic sensor IC
- 51: IC main body
- 52: detecting connection pin
- 81: electric valve main body
- 82: armature unit
- 82A: cover assembly
- 83: linear motion shaft
- 84: base portion
- 90: body
- 91: flow path

## Claims

1. An IC holder that is fixed to an outer surface of a motor and holds a magnetic sensor IC for detecting whether or not a rotor operates based on a change in a magnetic field outside the motor, the motor including a rotor case housing the rotor, an armature case housing an armature and fitted on outside of the rotor case, and a plurality of driving connection pins, on the armature case, to be inserted into a plurality of pin holes of an external circuit board, the IC holder comprising:
a pin support portion that supports a plurality of detecting connection pins serving as connection pins of the magnetic sensor IC so that at least tip portions of the plurality of detecting connection pins extend in parallel with tip portions of the plurality of driving connection pins.

2. The IC holder according to claim 1, further comprising:
a fixing portion for fixing the IC holder to the armature case and holding a state in which the IC holder is adjacent to an outer surface of the rotor case; and
a main body housing portion having an opening on the rotor case side to house at least an IC main body of the magnetic sensor IC, the opening being closed by the outer surface of the rotor case to restrict movement of the IC main body in all three-dimensional directions.

3. The IC holder according to claim 2, wherein
the pin support portion is arranged at a position shifted from the main body housing portion in an axial direction of the rotor case,
the pin support portion further includes
a plurality of through holes through which the plurality of detecting connection pins passes, the plurality of through holes penetrating the IC holder in a direction intersecting with the axial direction of the rotor case,
a plurality of pin holding grooves that receives the plurality of detecting connection pins and extends from the plurality of through holes toward the main body housing portion on a surface of the IC holder facing the rotor case, and
a plurality of pin holding recesses that receives the plurality of detecting connection pins and extends from the plurality of through holes toward a side separating from the main body housing portion on a surface of the IC holder opposite to the rotor case, and
the pin support portion supports the plurality of detecting connection pins so that the tip portions of the plurality of detecting connection pins are parallel with the axial direction of the rotor case.

4. The IC holder according to claim 3, wherein
the surface of the IC holder facing the rotor case has an inclined surface in which the plurality of pin holding grooves is formed, the inclined surface being inclined to separate from the rotor case as separating away from the main body housing portion,
bottom surfaces of the plurality of pin holding recesses are arranged at positions farther from the rotor case than the main body housing portion, and
the pin support portion supports the plurality of detecting connection pins bent in a crank shape.

5. An electric valve comprising, as a drive source, an actuator to which the IC holder according to any one of claims 1 to 4 is attached.

6. A fluid control device comprising:
a body having a flow path through which a fluid flows;
an electric valve that includes, as a drive source, the motor to which the magnetic sensor IC is attached by the IC holder according to claim 3 and has a base portion provided on an extension line of the rotor case and fixed to the body so as to control a flow rate of the fluid;
a circuit board on which a motor drive circuit to which the plurality of driving connection pins is connected and a detection circuit to which the plurality of detecting connection pins is connected are mounted, the circuit board being arranged to overlap an end surface of the electric valve far from the body;
an electric valve cover that is fixed to the body and surrounds the electric valve and the circuit board from a side; and
a lid body that closes an opening in an end portion of the electric valve cover on a side opposite to the body.

7. A method of manufacturing the fluid control device according to claim 6, wherein
the electric valve is prepared such that the electric valve is separated into an armature unit including the armature case and contents of the armature case and an electric valve main body other than the armature unit, the IC holder is fixed to the armature unit, and the magnetic sensor IC is attached to the IC holder,
the method comprising:
a body assembling step of fixing the electric valve main body and the electric valve cover to the body;
a unit housing step of joining the armature unit to the electric valve main body and housing the armature unit in the electric valve cover;
a board connecting step of housing the circuit board in the electric valve cover and soldering or brazing, to the circuit board, the plurality of driving connection pins and the plurality of detecting connection pins inserted into the plurality of pin holes of the circuit board; and
a sealing step of fixing the lid body so as to close the opening in the end portion of the electric valve cover.
